# FASCICULE DE BREVET EUROPEEN

(11) **EP 1 922 584 B1**
(45) Date de publication et mention de la délivrance du brevet: **08.05.2019**
(21) Numéro de dépôt: 06793325.9
(22) Date de dépôt: 07.09.2006
(51) Int. Cl.: G02F 1/1362

(54) **AFFICHEUR MATRICIEL A CRISTAUX LIQUIDES DU TYPE A MATRICE ACTIVE**
FLÜSSIGKRISTALLMATRIXANZEIGE MIT AKTIVMATRIX
ACTIVE-MATRIX LIQUID CRYSTAL MATRIX DISPLAY

(30) Priorité: 09.09.2005 FR 0509224
(43) Date de publication de la demande: 21.05.2008
(73) Titulaire: InterDigital CE Patent Holdings, 75017 Paris (FR)
(72) Inventeur: KRETZ, Thierry, 38430 Saint Jean De Moirans (FR)
(74) Mandataire: Esselin, Sophie
(86) Numéro de dépôt international: PCT/EP2006/066130
(87) Numéro de publication internationale: WO 2007/028818

(56) Documents cités:
- EP-A- 0 883 102
- FR-A1- 2 848 011
- US-A- 5 949 398
- US-B1- 6 411 272
- MAGARINO; J & AL: "R & D and Fabrication of Integrated Amorphous Silicon Drivers AMLCDs : A reviewtion of a Tra" IDW. PROCEEDINGS OF THE INTERNATIONAL DISPLAY WORKSHOPS, NIIGATA JP, 8 décembre 2004 (2004-12-08), pages 303-1306, XP002406093 SAN JOSE, CA : SID, US
- PATENT ABSTRACTS OF JAPAN vol. 1995, no. 08, 29 septembre 1995 (1995-09-29) -& JP 07 120721 A (NIPPONDENSO CO LTD), 12 mai 1995 (1995-05-12)

## Description

La présente invention concerne un afficheur matriciel à cristaux liquides LCD (*Liquid Crystal Display*), et plus particulièrement les afficheurs du type à matrice active.

Les afficheurs à matrice active comprennent un élément actif au niveau de chaque pixel, qui est commandé de manière appropriée par un dispositif d'adressage des pixels, pour afficher un niveau de gris correspondant à une donnée à afficher.

Le dispositif d'adressage des pixels comprend de manière habituelle un circuit de commande des lignes de sélection de rangées de l'afficheur, communément appelé driver ligne, par lequel les rangées sont sélectionnées une à une en séquence, sur chaque trame vidéo et un circuit de commande des colonnes de pixel de l'afficheur, communément appelé driver colonne, par lequel les niveaux de tension correspondant aux données à afficher sont appliqués sur les colonnes. Dans la suite on utilise le terme "driver" ou "drivers" pour désigner ces circuits de commande ou le dispositif d'adressage. Ces drivers sont dits intégrés quand ils sont réalisés sur le même substrat que la matrice active, en périphérie de cette matrice et avec la même technologie de fabrication.

Selon l'état de l'art de la technologie silicium amorphe, les drivers lignes intégrés sont du type à haute impédance de sortie de manière à limiter le stress des transistors et donc la dérive de la tension de seuil de ces derniers. Avec de tels drivers, lorsque les lignes sont non sélectionnées, soit plus de 99% du temps d'adressage de l'afficheur, elles sont dans un état dit flottant. Dans cet état, les lignes sont sensibles à toutes les variations parasites, et en particulier celles liées aux couplages capacitifs dues aux croisements des lignes avec les colonnes. Plus précisément, pour chaque nouvelle ligne sélectionnée, les données à afficher sont appliquées sur toutes les colonnes de l'afficheur : du fait des couplages capacitifs dus aux croisements entre les lignes et les colonnes, les lignes non sélectionnées voient les niveaux de tension qui varient sur ces colonnes. Ceci n'est pas sans conséquence sur la qualité d'affichage de l'afficheur.

En particulier, ces couplages peuvent entraîner une sélection non désirée d'une ligne de l'afficheur et les données de cette ligne peuvent s'en trouver modifiées. C'est le problème dit de multi-sélection de lignes. Ce problème de couplage ligne-colonne est notamment décrit dans la demande EP 0 883 102 A qui propose l'utilisation d'une ligne capacitive dans une matrice, dont le niveau de tension est élaboré par un comparateur, en fonction du niveau du couplage capacitif mesuré, dans le but de compenser ces couplages.

D'autres effets néfastes peuvent se produire selon le mode de réalisation de la capacité de stockage associée à chaque électrode pixel de la matrice active. Notamment, lorsque cette capacité de stockage est réalisée avec la ligne de sélection de rangée des pixels, ces couplages vont aussi entraîner des variations de niveaux de tension stockés sur les pixels via la capacité de stockage. La qualité de l'affichage s'en trouve affectée.

En outre, dans une telle structure, la capacité totale de chaque ligne dépend de l'information vidéo affichée sur les pixels de cette ligne, via la capacité de stockage. En effet, cette capacité totale dépend au premier ordre de la somme de toutes les capacités de couplage entre cette ligne et chacune des colonnes de la matrice, plus la somme de toutes les capacités de stockage en série avec les capacités cristal liquide associées, réalisées avec cette ligne. Cette dépendance peut entraîner des non uniformités d'affichage.

Un objet de l'invention est de résoudre les différents inconvénients liés à l'utilisation de tels drivers lignes.

Une solution technique a été trouvée dans l'invention pour résoudre ces différents inconvénients, et en particulier pour supprimer la sensibilité aux couplages parasites, par l'implantation sur chaque ligne d'une capacité de stabilisation. La taille de cette capacité est choisie suffisamment grande pour stabiliser la ligne et limiter les perturbations vidéos par exemple à un niveau inférieur au pas de l'échelle des niveaux de gris de l'écran. Cette capacité implantée sur chacune des lignes de sélection de la matrice permet de stabiliser le niveau de la ligne associée. Le fonctionnement de l'afficheur et ses performances d'affichage, en particulier l'uniformité de l'affichage sont améliorés.

Un autre objet de l'invention est d'éviter les pertes de rendement de fabrication liées à l'implantation d'une telle capacité sur chaque ligne, en prévoyant de manière avantageuse des zones de réparation.

L'invention concerne une matrice active pour un écran à cristaux liquides, comprenant dans une zone active une pluralité d'électrodes pixels chacune adressable au moyen d'une ligne de sélection parmi N lignes de sélection et d'une ligne de donnée parmi M lignes de données, les lignes de sélection étant adressées en séquence au moyen d'un circuit de commande; et pour chaque électrode pixel, une capacité de stockage connectée à l'électrode pixel, caractérisée en ce qu'elle comprend dans la zone active et pour chaque ligne de sélection reliée à une sortie du circuit de commande, une capacité de stabilisation de ligne dont une première électrode est reliée à ladite ligne de sélection et une deuxième électrode est connectée à un bus conducteur alimenté par une tension de référence continue et qui est distribuée le long de la ligne de sélection, équivalente à M capacités de stabilisation élémentaires disposées en parallèle, une par ligne de donnée.

Selon un mode de réalisation de l'invention, ladite capacité de stabilisation est connectée entre la ligne de sélection associée et un niveau de référence de l'afficheur, typiquement un niveau de référence parmi les alimentations analogiques du circuit de commande des lignes.

Selon un mode de réalisation de l'invention, la capacité de stabilisation d'une ligne de sélection est formée dans la zone active et distribuée le long de ladite ligne, au moyen d'un bus conducteur comprenant des parties en vis à vis des lignes de sélection, séparées du niveau de ces lignes par au moins une couche d'isolant. Ce bus peut être réalisé par un plan conducteur, ou par un réseau de conducteurs parallèles, verticaux ou horizontaux. Le bus conducteur de la capacité de stabilisation de ligne selon l'invention peut avantageusement former une capacité de stockage supplémentaire pour chacun des pixels.

L'invention concerne aussi un afficheur matriciel à cristaux liquides comprenant une telle matrice active et un procédé de réalisation d'une telle matrice active. D'autres avantages et caractéristiques de l'invention apparaîtront plus clairement à la lecture de la description qui suit, faite à titre indicatif et non limitatif de l'invention et en référence aux dessins annexés, dans lesquels :
- la figure 1 illustre un schéma électrique d'une matrice active selon l'état de l'art ;
- la figure 2 illustre un premier mode de réalisation d'une capacité de stabilisation de ligne;
- la figure 3 illustre un mode de réalisation d'une capacité de stabilisation de ligne selon l'invention ;
- les figures 4 et 5 illustrent chacune une variante du mode de réalisation selon l'invention illustré à la figure 3.

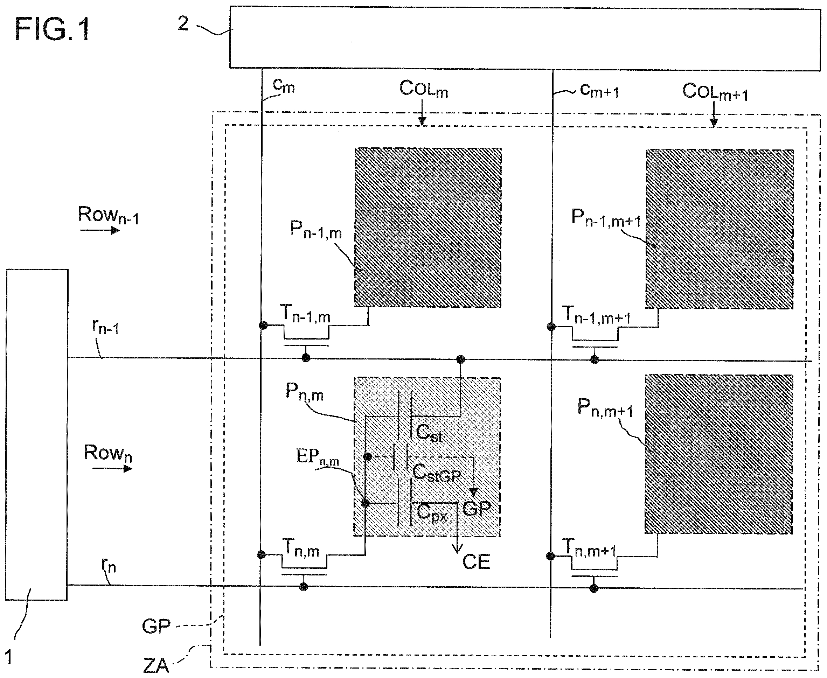

La figure 1 illustre schématiquement une matrice active d'un afficheur selon l'état de l'art, qui comprend N x M pixels arrangés en N rangées telles que Rowₙ₋₁ et Rowₙ et M colonnes telles que Colₘ et Colₘ₊₁. Chaque pixel est adressable par une ligne de sélection et une ligne de donnée de la matrice. Un circuit 1 de commande des lignes de sélection, communément appelé "driver ligne" fournit ainsi séquentiellement un signal d'adressage sur chacune des N lignes de sélection. Notamment il commande les lignes de sélection rₙ₋₁ et rₙ des rangées Rowₙ₋₁ et Rowₙ.

Un circuit 2 de commande des colonnes, communément appelé "driver colonne" applique les niveaux de tension correspondant aux niveaux de gris à afficher sur chacun de M lignes de données associées aux M colonnes de pixels. A chaque colonne de pixels de l'afficheur, correspond une ligne de donnée qui est pilotée par le driver colonne 2. Notamment les lignes de données cₘ et cₘ₊₁ sont celles associées respectivement aux colonnes Colₘ et Colₘ₊₁.

Les drivers ligne 1 et colonne 2 peuvent être du type intégrés sur la matrice. Dans ce cas ils sont réalisés en périphérie de la zone active de la matrice, c'est à dire la zone comprenant les pixels. Ils peuvent aussi être externes à la matrice.

Dans l'exemple illustré on a ainsi représenté un pixel P_{n,m} situé sur la nième rangée Rowₙ et la mième colonne Colₘ. Il est adressable par la sélection de la ligne de sélection rₙ correspondant à la rangée Rowₙ et l'application d'une tension d'affichage sur la ligne de donnée cₘ correspondant à la colonne Colₘ.

Chaque pixel comprend une électrode pixel EP_{n,m} respective, qui est une électrode conductrice réalisée sur la matrice active. Cette électrode est transparente dans une application transmissive. Elle est opaque dans une application réflective.

L'afficheur comprend la matrice active, un substrat formant contre-électrode, et du cristal liquide entre la matrice et la contre-électrode. Une capacité pixel est formée entre chaque électrode pixel sur la matrice active et la contre-électrode CE de l'afficheur.

L'électrode pixel EP_{n,m} du pixel P_{n,m} est commandée par un élément actif de commutation, généralement un transistor comme illustré sur la figure. Au pixel P_{n,m} est ainsi associé un transistor T_{n,m}, connecté en série entre une ligne de donnée cₘ commandée par le driver colonne 2, et l'électrode pixel EP_{n,m}. Ce transistor est commandé par un signal de sélection de la rangée correspondant au pixel considéré, appliqué par le driver ligne 1. En pratique, la grille de ce transistor est connectée à (ou formée par) la ligne de sélection de la rangée considérée. Les grilles des transistors d'une même rangée sont en pratique toutes connectées à (ou formées par) la même ligne conductrice de la matrice active, sur laquelle le driver ligne applique un signal de sélection de rangée.

Le transistor associé à un pixel est rendu actif par application d'un signal de sélection sur la ligne de sélection de rangée correspondante, par exemple sur la rangée rₙ pour le pixel P_{n,m}, et application de la tension à charger sur une ligne de donnée associée, par exemple sur la ligne de donnée cₘ pour le pixel P_{n,m}. Le transistor associé à un pixel permet ainsi de charger ce pixel P_{n,m} à une tension représentative du niveau de gris à afficher, lorsque la ligne de sélection est adressée. Lorsque la ligne n'est pas sélectionnée, le transistor est équivalent à un circuit ouvert, isolant le pixel du reste de la matrice, ce qui doit lui permettre de maintenir le niveau de tension chargé, tout le temps d'une trame vidéo.

A cet effet, une capacité de stockage est généralement prévue, formée entre l'électrode pixel EP_{n,m} et un niveau conducteur de la matrice active, la capacité pixel étant insuffisante à maintenir le niveau de tension sur toute la durée d'une trame, du fait des couplages existants avec les lignes de sélection et de données voisines, par l'intermédiaire de capacités parasites planaires. Cette capacité de stockage des pixels peut être réalisée de différentes façons, utilisées seules ou en combinaison selon la technologie de matrice active considérée. Dans l'exemple illustré, une capacité de stockage Cₛₜ formée entre l'électrode pixel et la ligne de sélection précédente : par exemple, pour le pixel P_{n,m}, la capacité de stockage Cₛₜ est formée entre l'électrode pixel EP_{n,m} et la ligne de sélection rₙ₋₁. Cette capacité peut être obtenue de différentes façons. Par exemple la structure dite "capacitor on gate" prévoit que le dessin de l'électrode pixel est tel qu'il recouvre en partie la ligne de sélection précédente. On peut aussi prévoir un bus conducteur entre chaque paire de lignes de sélection, qui est électriquement connecté à la ligne de sélection précédente.

Dans l'exemple illustré, on dispose d'une capacité de stockage supplémentaire C_{stGP}, formée entre chaque électrode pixel et un plan conducteur GP, généralement appelé plan de masse, porté à une tension de référence V_{GP}, et qui peut en pratique se situer en dessous ou au-dessus des lignes de sélection et de données de la matrice.

Selon l'invention, on prévoit sur chaque ligne de sélection de rangée de la matrice, une capacité de stabilisation de cette ligne, dans le but d'augmenter la capacité planaire de la ligne. De cette façon, lorsque la ligne n'est pas sélectionnée, la capacité planaire de la ligne permet de rendre cette ligne et les pixels de cette ligne, insensibles aux différentes perturbations dues à l'état de haute impédance de la sortie correspondante du driver ligne 1. Notamment l'effet de multi-sélection de lignes est évité.

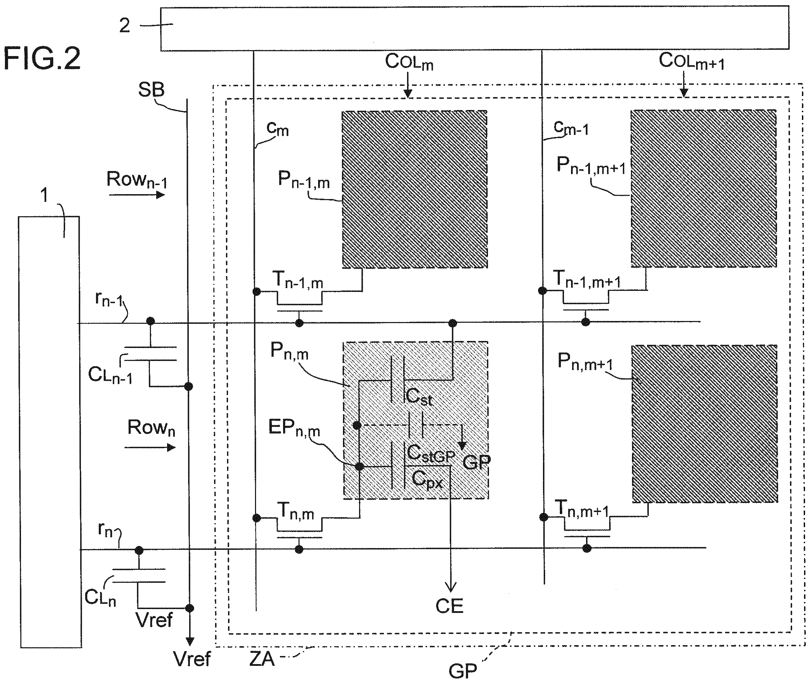

La figure 2 illustre une capacité de stabilisation réalisée sur chaque ligne, en dehors de la zone active de la matrice qui contient les pixels avec leurs transistors. Dans l'exemple illustré, cette capacité de stabilisation est réalisée entre les sorties du driver ligne 1 et la zone active ZA matérialisée en pointillé sur la figure. On a ainsi sur la ligne rₙ₋₁, respectivement rₙ, une capacité de stabilisation associée CLₙ₋₁, respectivement CLₙ. Chaque capacité de stabilisation est formée entre la ligne associée qui forme une première électrode, et un bus conducteur SB qui forme une deuxième électrode, alimenté par une tension de référence Vref.

La tension de référence Vref peut être une tension spécifique, définie en fonction des caractéristiques de l'afficheur. Cette tension Vref est une tension continue. Ce peut être typiquement la tension VGP du plan de masse GP (figure 1), ou la tension VCE de la contre-électrode. Une tension de référence fournie par le driver ligne, typiquement la tension de blocage Vg_{off} des transistors de la matrice, peut également convenir. La tension de référence Vref est commune à toutes les capacités de stabilisation de la matrice.

Une réalisation pratique simple de mise en oeuvre comprend la formation sur la matrice active mais en dehors de la zone active, d'un bus conducteur SP qui croise toutes les lignes de sélection, typiquement un bus vertical. Ce bus conducteur peut être réalisé sur la matrice sur un niveau conducteur séparé du niveau conducteur des lignes de sélection par au moins une couche d'isolant, de préférence sur un niveau technologique existant, typiquement sur le même niveau qu'un plan conducteur GP de la matrice tel qu'illustré sur la figure 1.

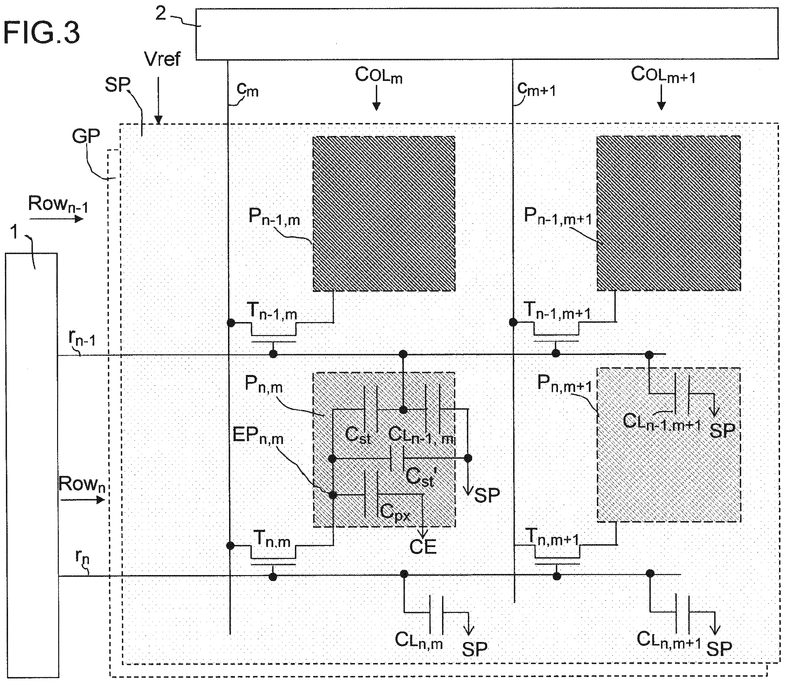

Les figures 3 à 5 illustrent une capacité de stabilisation réalisée selon l'invention, dans la zone active : la capacité de stabilisation d'une ligne de sélection rₙ est réalisée dans la zone active de la matrice et distribuée le long de cette ligne de sélection. Elle est équivalente à M capacités élémentaires en parallèle: CL_{n,m,} CLₙ,ₘ₊₁..., une par colonne (ou ligne de donnée).

Dans l'exemple de mise en oeuvre illustré sur la figure 3, on utilise un bus conducteur SP, sous forme d'un plan conducteur réalisé sous ou au-dessus des lignes de sélection et de données de la matrice, dans un matériau conducteur transparent, porté au niveau de tension de référence Vref. Ce plan SP présente des parties pleines en vis à vis des lignes de sélection, séparées du niveau des lignes de sélection par au moins un niveau d'isolant, formant ainsi les capacité de stabilisation des lignes de sélection selon l'invention.
On obtient une capacité élémentaire de stabilisation associée à une ligne de sélection, par exemple la capacité élémentaire CL_{n-1,m} associée à la ligne rₙ₋₁, sur la colonne Colₘ. Cette capacité de stabilisation CL_{n-1,m} est connectée entre la ligne de sélection rₙ₋₁ dans la colonne de pixel Colₘ, et le plan conducteur SP. Cette capacité élémentaire de stabilisation de la ligne rₙ₋₁ a une électrode commune avec la capacité de stockage Cₛₜ du pixel P_{n,m}. En effet cette capacité de stockage Cₛₜ est formée dans la colonne Colₘ entre l'électrode pixel EP_{n,m} et la ligne de sélection précédente rₙ₋₁.

Si le plan conducteur SP comprend des parties pleines sous les électrodes pixel, il forme en outre une capacité de stockage supplémentaire Cst' pour chaque pixel. On a représenté cette capacité de stockage supplémentaire Cst' pour le pixel P_{n,m} sur la figure : cette capacité Cst' est formée entre l'électrode pixel EP_{n,m} et le plan conducteur SP, par la portion de ce plan en regard de l'électrode concernée.

Avantageusement, ce plan conducteur SP est réalisé par un niveau technologique pré-existant dans la matrice active disposé au-dessus ou en dessous des lignes de sélection et de données de la matrice

On a vu notamment en relation avec la figure 1, que dans certaines structures de matrice active de l'état de l'art, une capacité C_{stGP} est réalisée entre chaque électrode pixel et un plan conducteur GP, pour la partie de ce plan de masse en regard de l'électrode pixel.

Ce plan conducteur GP est réalisé dans un matériau conducteur transparent par exemple en ITO. Il peut être enterré sous les couches correspondant aux transistors, c'est à dire sous la matrice de lignes de sélection et de lignes de données. Ce plan de masse enterré est dans certain cas de type bi-couche, avec une couche opaque en plus de la couche transparente, par exemple en titane réalisant un écran optique. Il peut être disposé au-dessus des lignes de sélection et de données de la matrice, comme par exemple décrit dans la demande de brevet EP 0682282 ayant pour titre *"Liquid display device with shielded pixel structure".* Ce plan conducteur correspond alors à un blindage qui a pour effet d'écranter les lignes de champ dues aux capacités planaires parasites entre les électrodes pixel et les lignes de sélection et de données.

Ainsi, comme illustré sur la figure 1, une matrice active peut comporter de manière connue un plan conducteur GP, réalisé au-dessus ou au-dessous des lignes de sélection et de données, porté à un niveau de référence VGP déterminé, et qui offre une capacité de stockage C_{stGP} associée à chaque pixel, formée entre l'électrode de ce pixel et ce plan conducteur.

Sur la figure 3, on a représenté un tel plan pré-existant, noté GP. Si on utilise ce plan comme plan conducteur pour réaliser une capacité de stabilisation de ligne selon l'invention, cela revient sur la figure à confondre les plans SP et GP. La capacité Cₛₜ' est alors confondue avec la capacité C_{stGP} réalisée entre l'électrode pixel et le plan GP (non représentée sur la figure 3, dans un souci d'allègement du dessin).

Si ce plan GP n'est pas un plan conducteur continu, c'est à dire s'il est évidé, la mise en oeuvre de l'invention consiste alors simplement à modifier le dessin le cas échéant pour qu'il présente en plus, des parties pleines en vis à vis des lignes de sélection, pour former les capacités de stabilisation de ligne selon l'invention.

Un intérêt d'une telle mise en oeuvre de l'invention, est qu'il utilise un niveau technologique de matrices de l'état de l'art, ce qui est avantageux en terme de réalisation et de limitation du nombre de niveaux technologiques.

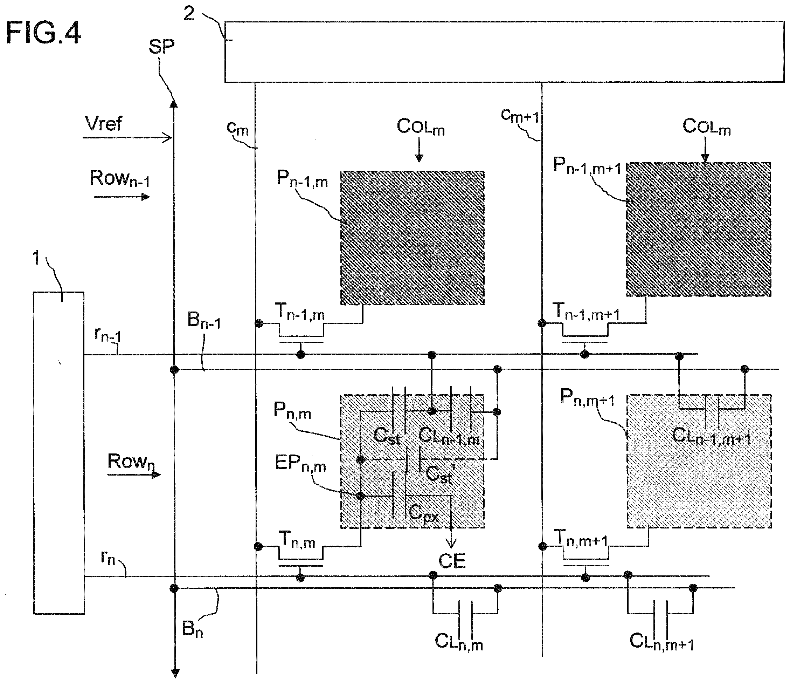

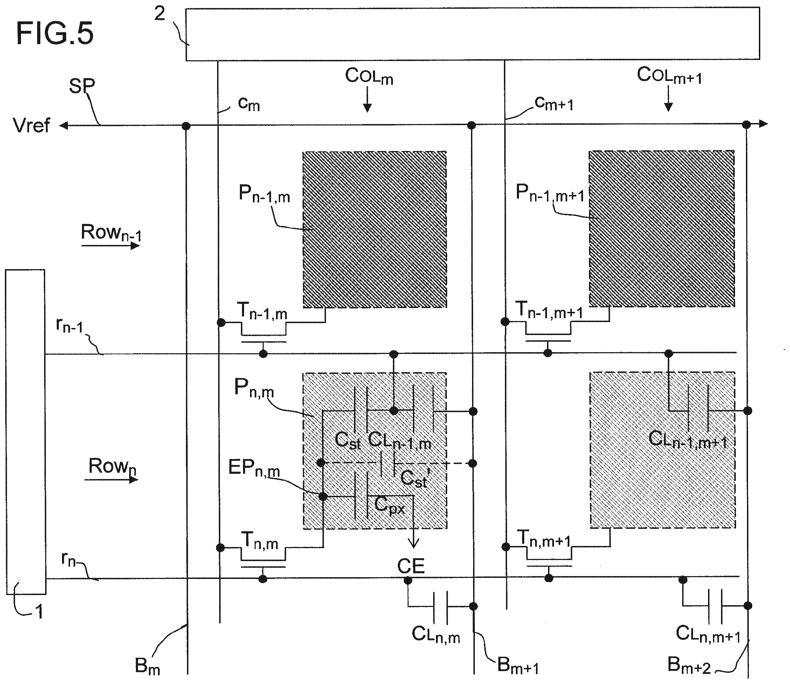

Dans un autre exemple de mise en oeuvre de l'invention illustré sur les figures 4 et 5, on ajoute un bus conducteur spécifique dans la matrice active. Dans cette mise en oeuvre de l'invention, une capacité élémentaire de stabilisation d'une ligne de sélection, par exemple la capacité CL_{n-1,m} de la ligne rₙ₋₁, dans la colonne Colₘ, est une capacité connectée à la ligne de sélection de rangée rₙ₋₁ et formée avec ce bus conducteur spécifique porté à une tension de référence Vref. Cette tension de référence est typiquement une tension d'alimentation continue, qui peut être une tension spécifique, ou une tension d'alimentation fournie par le driver ligne 1. Cette tension spécifique doit en pratique être une tension continue stable non sensible aux commutations des pistes qui se croisent (couplage). On peut typiquement utiliser la tension Vgoff de blocage des transistors, ou encore la tension de référence appliquée sur le plan de masse GP. Le niveau de tension est principalement déterminé de manière à limiter les risques de disclinaison ou de fuites optiques (mauvaises orientation des molécules de cristal liquide) résultant de la tension parasite généré par ce réseau de conducteurs.

Dans l'exemple illustré sur la figure 4, ce bus comprend un réseau de conducteurs horizontaux Bₙ₋₁, Bₙ, chacun disposé entre une paire de ligne de sélection rₙ₋₁, rₙ, et parallèles à celles-ci.

Dans l'exemple illustré sur la figure 5, ce bus comprend un réseau de conducteurs verticaux Bₘ, Bₘ₊₁, chacun disposé entre une paire de ligne de données cₘ, cₘ₊₁, et parallèles à celles-ci.

Dans un exemple de réalisation du réseau de conducteurs horizontaux de la figure 4, on pourra utiliser en pratique le même métal que celui des lignes de données Cₘ (métal source/drain des transistors TFT), par exemple du molybdène (Mo), pour réaliser la capacité de stabilisation de la ligne. En dehors des zones de croisements, on utilisera de préférence le niveau de métal de la ligne de sélection en parallèle, par exemple une bicouche de Titane et de Molybdène (TiMo).

Pour réaliser le réseau de conducteurs verticaux de la figure 5, on pourra utiliser en pratique le même métal que celui des lignes de sélection (TiMo). En dehors des zones de croisements, on utilisera de préférence le niveau de métal de la ligne de données en parallèle (Mo).

Ces conducteurs horizontaux ou verticaux peuvent également être réalisés en utilisant le niveau technologique du plan de masse enterré ou du blindage, ou un niveau conducteur spécifique disposé sous ou au-dessus des lignes de données et de sélection, mais sous forme d'un réseau de conducteurs en parallèles et non plus d'un plan continu.

Selon un aspect de l'invention, si le dessin de ce bus spécifique est défini pour avoir une partie au moins en regard des électrodes pixels, ce bus spécifique peut servir de bus de stockage supplémentaire pour les pixels. Les possibilités de mise en oeuvre de cet aspect de l'invention dépendent principalement de la place disponible dans le pixel, du rendement recherché, des possibilités de réparation,...

Sur la figure 4, on a illustré un schéma électrique équivalent de la capacité de stockage pixel associée à l'électrode pixel EP_{n,m}, et la capacité de stabilisation associée à la ligne de sélection rₙ₋₁ selon l'invention.

On trouve, ainsi en série, l'électrode pixel EP_{n,m}, la capacité de stockage Cₛₜ, la capacité de stabilisation CL_{n-1,m}, le bus spécifique rₙ₋₁.

Si le dessin du conducteur associé à chaque ligne de sélection est tel qu'il passe sous l'électrode pixel EP_{n,m}, la partie du bus en vis à vis de l'électrode pixel, sert aussi de capacité de stockage supplémentaire Cₛₜ', comme illustré en pointillé sur la figure 4, entre l'électrode pixel EP_{n,m} et le bus. Ceci peut typiquement être obtenu en prévoyant que chaque conducteur du réseau passe sous une rangée d'électrodes pixel, avec un décroché vers la ligne de sélection de manière à passer au-dessus ou au-dessous de cette ligne, de manière à réaliser la capacité de stabilisation de cette ligne. Le vis à vis du conducteur avec chaque électrode pixel réalise la capacité de stockage Cₛₜ' supplémentaire associée. En pratique, on peut par exemple réaliser ces conducteurs horizontaux dans un matériau conducteur transparent, typiquement en ITO sur le même niveau que les lignes de sélection, pour la partie passant sous les électrodes pixel. Pour réaliser le décroché vers les lignes de sélection, on pourra avantageusement utiliser le niveau des lignes de données, et passer ainsi au-dessus des lignes de sélection. De cette manière, on n'utilise pas de niveau technologique supplémentaire pour ce réseau de conducteurs spécifique.

On trouve de manière similaire sur la figure 5, la capacité de stockage Cₛₜ, la capacité de stabilisation CL_{n-1,m}, et, en pointillé, la capacité de stockage Cₛₜ' obtenue si le dessin du bus conducteur est tel qu'une partie au moins passe sous l'électrode pixel considérée. En pratique, on peut par exemple réaliser ces conducteurs verticaux dans un matériau conducteur transparent, typiquement en ITO, sur le même niveau que les lignes de données.

D'une manière générale, le bus conducteur selon l'invention, formé par un plan conducteur ou un réseau de conducteurs, est formé de préférence dans un matériau conducteur transparent, de manière à ne pas perturber le taux d'ouverture des pixels. Notamment, s'il comprend des parties sous ou au-dessus des électrodes pixels, comme c'est notamment le cas si l'on cherche à bénéficier d'une capacité de stockage supplémentaire réalisée avec ce bus ces parties doivent être réalisées dans un matériau conducteur transparent, par exemple de l'ITO. D'autres parties peuvent être réalisées en matériau conducteur opaque, notamment les parties en vis à vis des lignes de sélection, elle-même opaques. Ces aspects pratiques de réalisation vont dépendre des options de dessin retenues et de la technologie considérée.

L'invention qui vient d'être décrite permet d'améliorer la qualité de l'affichage sur des écrans à cristaux liquides à matrice active aussi bien des grands écrans que des petits, sans rien céder au rendement de fabrication, parce qu'elle peut être mise en oeuvre en utilisant des niveaux technologiques de la matrice existants, et que sa mise en oeuvre permet d'effectuer facilement des réparations fiables. Les différentes mises en oeuvres décrites sont choisies en fonction notamment des niveaux technologiques existants de la matrice active considérée. En particulier, elles dépendent des niveaux technologiques utilisés pour réaliser les capacités de stockage.

Elle s'applique notamment à des afficheurs utilisant des matrices actives à drivers intégrés qui ont généralement cette particularité d'avoir des sorties en haute impédance. Mais elle s'applique de façon plus générale, chaque fois que les lignes de sélection non sélectionnées sont sensibles à des variations électriques dans leur voisinage.

## Revendications

1. Matrice active pour un écran à cristaux liquides, comprenant :
dans une zone active (ZA), une pluralité d'électrodes pixels (EP_{n,m}) chacune ayant une capacité de stockage (Cₛₜ) connectée à l'électrode pixel et chacune adressable au moyen d'une ligne de sélection (rₙ) parmi N lignes de sélection et d'une ligne de donnée (cₘ) parmi M lignes de données, les lignes de sélection étant adressées en séquence au moyen d'un circuit de commande (1) ;
**caractérisée en ce qu'**elle comprend dans la zone active (ZA) et pour chaque ligne de sélection (rₙ) reliée à une sortie du circuit de commande (1), une capacité de stabilisation de ligne (CLₙ) dont une première électrode est reliée à ladite ligne de sélection (rₙ) et une deuxième électrode est connectée à un bus conducteur (SP) alimenté par une tension de référence continue (Vref), et qui est distribuée le long de la ligne de sélection (rₙ), équivalente à M capacités de stabilisation élémentaires (CL_{n,m}, CL_{n,m+1}) disposées en parallèle, une par ligne de donnée (cₘ, cₘ₊₁).

2. Matrice active selon la revendication 1, **caractérisée en ce que** ladite tension de référence continue (Vref) est commune à toutes les capacités de stabilisation de la matrice.

3. Matrice active selon la revendication 1 ou 2, **caractérisée en ce que** ladite deuxième électrode de la capacité de stabilisation d'une ligne de sélection est formée par un bus conducteur (SP) comprenant au moins des parties en vis à vis des lignes de sélection, séparées du niveau de ces lignes par au moins un niveau d'isolant.

4. Matrice active selon la revendication 3, **caractérisée en ce que** ledit bus conducteur (SP) comprend un réseau de conducteurs verticaux (Bₘ, Bₘ₊₁), parallèles aux dites lignes de données (cₘ, cₘ₊₁).

5. Matrice active selon la revendication 3, **caractérisée en ce que** ledit bus conducteur (SP) comprend un réseau de conducteurs horizontaux (Bₙ₋₁, Bₙ), parallèles aux dites lignes de sélection (rₙ₋₁, rₙ).

6. Matrice active selon la revendication 4 ou 5, **caractérisée en ce que** lesdits conducteurs horizontaux ou verticaux sont réalisés sur un ou des niveaux correspondants aux lignes de sélection et/ou de données.

7. Matrice active selon l'une quelconque des revendications 3 à 5, **caractérisée en ce que** ledit bus conducteur (SP) est formé par un plan conducteur réalisé au-dessus ou au-dessous des lignes de sélection et de données, et séparé du niveau de ces lignes par au moins un niveau d'isolant.

8. Matrice active selon la revendication 6, **caractérisée en ce que** ledit bus conducteur (SB, SP) est formé sur ou par un plan conducteur pré-existant (GP) de la matrice.

9. Matrice active selon l'une quelconque des revendications 3 à 8, **caractérisée en ce que** ledit bus conducteur comprend des parties en vis à vis des électrodes pixel, sur un niveau séparé des électrodes pixel par au moins un niveau d'isolant en sorte qu'une capacité de stockage supplémentaire est formée avec chaque électrode pixel.

10. Afficheur matriciel à cristaux liquides comprenant une matrice active selon l'une quelconque des revendications précédentes.

11. Procédé de fabrication d'une matrice active selon l'une quelconque des revendications précédentes, pour un afficheur matriciel à cristal liquide à matrice active, la matrice active comprenant :
dans une zone active (ZA) une pluralité d'électrodes pixels (EP_{n,m}) chacune ayant une capacité de stockage (Cₛₜ) connectée à l'électrode pixel et chacune adressable au moyen d'une ligne de sélection (rₙ) parmi N lignes de sélection et d'une ligne de donnée (cₘ) parmi M lignes de données, les lignes de sélection étant adressées en séquence au moyen d'un circuit de commande (1) ;
**caractérisé en ce que** le procédé consiste à réaliser dans la zone active (ZA) et pour chaque ligne de sélection (rₙ) reliée à une sortie du circuit de commande (1), une capacité de stabilisation de ligne (CLₙ) qui est distribuée le long de la ligne de sélection (rₙ), équivalente à M capacités de stabilisation élémentaires (CL_{n,m}, CL_{n,m+1}) disposées en parallèle, une par ligne de donnée (cₘ, cₘ₊₁), entre ladite ligne de sélection (rₙ) et un bus conducteur (SP) alimenté par une tension de référence continue (Vref) et qui est réalisé sur un niveau conducteur de la matrice active.

## Patentansprüche

1. Aktivmatrix für eine Flüssigkristallanzeige, umfassend:
in einem aktiven Bereich (ZA) eine Vielzahl von Pixelelektroden (EP_{n,m}), wobei jede eine Speicherkapazität (Cₛₜ) aufweist, die mit der Pixelelektrode verbunden ist, und jede mittels einer Auswahlzeile (rₙ) unter N Auswahlzeilen und einer Datenzeile (cₘ) unter M Datenzeilen adressierbar ist, wobei die Auswahlzeilen sequentiell mittels einer Steuerschaltung (1) adressiert werden,
**dadurch gekennzeichnet, dass** sie in dem aktiven Bereich (ZA) und für jede mit einem Ausgang der Steuerschaltung (1) verbundene Auswahlzeile (rₙ) eine Zeilenstabilisierungskapazität (CLₙ) umfasst, von der eine erste Elektrode mit der Auswahlzeile (rₙ) und eine zweite Elektrode mit einem leitenden mit einer Referenzgleichspannung (Vref) versorgten Bus (SP) verbunden sind, und die entlang der Auswahlzeile (rₙ) verteilt ist und M elementaren Stabilisierungskapazitäten (CL_{n,m}, CLₙ₊ₘ₊₁) entspricht, welche je eine pro Datenzeile (Cₘ, Cₘ₊₁) parallel angeordnet sind.

2. Aktivmatrix nach Anspruch 1, **dadurch gekennzeichnet, dass** die Referenzgleichspannung (Vref) allen Stabilisierungskapazitäten der Matrix gemeinsam ist.

3. Aktivmatrix nach Anspruch 1 oder 2, **dadurch gekennzeichnet, dass** die zweite Elektrode der Stabilisierungskapazität einer Auswahlzeile durch einen leitenden Bus (SP) gebildet ist, welcher mindestens Bereiche gegenüber den Auswahlzeilen aufweist, die von der Ebene dieser Zeilen durch mindestens eine Isolierungsebene getrennt sind.

4. Aktivmatrix nach Anspruch 3, **dadurch gekennzeichnet, dass** der leitende Bus (SP) ein Netzwerk aus vertikalen Leitern (Bₘ, Bₘ₊₁) umfasst, die parallel zu den Datenzeilen (Cₘ, Cₘ₊₁) sind.

5. Aktivmatrix nach Anspruch 3, **dadurch gekennzeichnet, dass** der leitende Bus (SP) ein Netzwerk aus horizontalen Leitern (Bₙ₋₁, Bₙ) umfasst, die parallel zu den Auswahlzeilen (rₙ₋₁, rₙ) sind.

6. Aktivmatrix nach Anspruch 4 oder 5, **dadurch gekennzeichnet, dass** die horizontalen oder vertikalen Leiter auf einer Ebene oder auf Ebenen hergestellt sind, die den Auswahlzeilen und/oder Datenzeilen entsprechen.

7. Aktivmatrix nach einem beliebigen der Ansprüche 3 bis 5, **dadurch gekennzeichnet, dass** der leitende Bus (SP) durch eine leitende Ebene gebildet ist, die über oder unter den Auswahl- und Datenzeilen hergestellt ist und durch mindestens eine Isolierungsebene von der Ebene dieser Zeilen getrennt ist.

8. Aktivmatrix nach Anspruch 6, **dadurch gekennzeichnet, dass** der leitende Bus (SB, SP) auf einer bereits vorhandenen leitenden Ebene (GP)oder durch eine bereits vorhandene leitende Ebene (GP)der Matrix gebildet ist.

9. Aktivmatrix nach einem beliebigen der Ansprüche 3 bis 8, **dadurch gekennzeichnet, dass** der leitende Bus Bereiche gegenüber den Pixelelektroden auf einer Ebene umfasst, die von den Pixelelektroden durch mindestens eine Isolierungsebene getrennt ist, so dass eine zusätzliche Speicherkapazität mit jeder Pixelelektrode gebildet wird.

10. Flüssigkristallmatrixanzeige mit einer Aktivmatrix nach einem beliebigen der vorhergehenden Ansprüche.

11. Verfahren zur Herstellung einer Aktivmatrix nach einem beliebigen der vorhergehenden Ansprüche für eine Flüssigkristallaktivmatrixanzeige, wobei die Aktivmatrix umfasst:
in einem aktiven Bereich (ZA) eine Vielzahl von Pixelelektroden (EP_{n,m}), wobei jede eine Speicherkapazität (Cₛₜ) aufweist, die mit der Pixelelektrode verbunden ist, und jede mittels einer Auswahlzeile (rₙ) unter N Auswahlzeilen und einer Datenzeile (cₘ) unter M Datenzeilen adressierbar ist, wobei die Auswahlzeilen sequentiell mittels einer Steuerschaltung (1) adressiert werden,
**dadurch gekennzeichnet, dass** das Verfahren darin besteht, in dem aktiven Bereich (ZA) und für jede mit einem Ausgang der Steuerschaltung (1) verbundene Auswahlzeile (rₙ) eine Zeilenstabilisierungskapazität (CLₙ) herzustellen, die entlang der Auswahlzeile (rₙ) verteilt ist und M elementaren Stabilisierungskapazitäten (CL_{n,m}, CL_{n,m+1}) entspricht, welche je eine pro Datenzeile (Cₘ, Cₘ₊₁) parallel zwischen der Auswahlzeile (rₙ) und einem leitenden Bus (SP) angeordnet sind, der mit einer Referenzgleichspannung (Vref) versorgt wird und auf einer leitenden Ebene der Aktivmatrix hergestellt ist.

## Claims

1. Active matrix for a liquid crystal display, comprising:
in an active zone (ZA), a plurality of pixel electrodes (EP_{n,m}) each having a storage capacity (Cₛₜ) connected to the pixel electrode and each one addressable by means of a selection line (rₙ) among N selection lines and a data line (cₘ) among M data lines, the selection lines being addressed sequentially by means of a driver circuit (1);
**characterised in that** it comprises in the active zone (ZA) and for each selection line (rₙ) connected to a driver circuit output (1), a line stabilisation capacity (CLₙ) having a first electrode connected to said selection line (rₙ) and a second electrode connected to a bus conductor (SP) powered by a direct reference voltage (Vref), and that is distributed along the selection line (rₙ), equivalent to M elementary stabilisation capacities (CLₙ,ₘ, CLₙₘ₊1) arranged in parallel, one per data line (cₘ, Cₘ+1).

2. Active matrix according to claim 1, **characterised in that** said direct reference voltage (Vref) is common to all the stabilisation capacities of the matrix.

3. Active matrix according to claim 1 or 2, **characterised in that** said second electrode of the stabilisation capacity of a selection line is formed by a bus conductor (SP) comprising at least the parts opposite the selection lines, separated from the level of these lines by at least a level of insulation.

4. Active matrix according to claim 3, **characterised in that** said bus conductor (SP) comprises a network of vertical conductors (Bₘ, Bₘ₊₁), parallel with said data lines (cₘ, cₘ₊₁).

5. Active matrix according to claim 3, **characterised in that** said bus conductor (SP) comprises a network of horizontal vertical conductors (B_{n·1}, Bₙ), parallel with said selection lines (rₙ-₁, rₙ).

6. Active matrix according to claim 4 or 5, **characterised in that** said horizontal or vertical conductors are performed on one or several levels corresponding to the selection and/or data lines.

7. Active matrix according to any one of claims 3 to 5, **characterised in that** said bus conductor (SP) is formed by a conductor plane performed above or below the selection and data lines, and separated from the level of these lines by at least one level of insulation.

8. Active matrix according to claim 6, **characterised in that** said bus conductor (SB, SP) is formed on or by a pre-existing conductor plane (GP) of the matrix.

9. Active matrix according to any one of claims 3 to 8, **characterised in that** said bus conductor comprises parts opposite the pixel electrodes, on a level separated from the pixel electrodes by at least one level of insulation so that one additional storage capacity is formed with each pixel electrode.

10. Liquid crystal matrix display comprising an active matrix according to any one of the preceding claims.

11. Method for the production of an active matrix according to any of the preceding claims for a liquid crystal matrix display
with an active matrix, the active matrix comprising:
in an active zone (ZA), a plurality of pixel electrodes (EPₙ,ₘ) each having a storage capacity (Cₛₜ) connected to the pixel electrode and each addressable by means of a selection line (rₙ) among N selection lines and a data line (cₘ) among M data lines, the selection lines being addressed sequentially by means of a driver circuit (1);
**Characterised in that** said method consists in performing in said active zone (ZA) and for each selection line (rₙ) connected to a driver circuit output (1), a line stabilisation capacity (CLₙ) that is distributed along the selection line (rₙ), equivalent to M elementary stabilisation capacities (CLₙ,ₘ. CLₙ,ₘ₊₁) arranged in parallel, one per data line (cₘ, cₘ₊₁), between said selection line (rₙ) and a bus conductor (SP) powered by a direct reference voltage (Vref) and performed on a conductor level of the active matrix.
